# EUROPEAN PATENT APPLICATION

(11) **EP 1 471 228 A2**
(43) Date of publication of application: **27.10.2004**
(21) Application number: 04008798.3
(22) Date of filing: 13.04.2004
(51) Int. Cl.: F02B 25/14, F02D 13/02

(54) **Internal combustion engine equipped with a scavenging control valve apparatus**

(30) Priority: 21.04.2003 JP 2003116395; 14.11.2003 JP 2003385653
(71) Applicant: Mitsubishi Heavy Industries, Ltd., Tokyo 108-8215 (JP)
(72) Inventor: Yoshihara, Sadao, Hyogo-ku Kobe-shi Hyogo-ken (JP)
(74) Representative: HOFFMANN - EITLE

(57) **Abstract**

The present invention is applicable to large two-cycle diesel engines and the object of this invention is to provide an internal combustion engine equipped with a scavenging control valve (1) which improves the thermal efficiency and reduces fuel consumption by minimizing the flow loss of the inflow of the scavenging air in the combustion chamber (14) flowing out from the exhaust port (18). The object is further to exercise accurate control over the area of the aperture of the scavenging passage to the target aperture area by maintaining a good seal between the cylinder liner (10) and the scavenging control valve (1) sliding thereupon. The internal combustion engine is equipped with a scavenging control valve (1) for changing the area of the aperture of the scavenging air passage to the cylinder, which is slidably mounted to either the inner surface (10a) or outer surface (10b) of the cylinder liner to open and close the scavenging holes (12); and a valve operating device to drive said scavenging control valve (1) in response to the engine's crank angle. With the valve operating device using the scavenging control valve (1), it can close the scavenging holes (12) on the piston (11) down stroke as a means of obtaining the maximum possible amount of effective work prior to the opening of the exhaust valve (16), and further, after the bottom dead position of the stroke, the timing for the closure of the scavenging passage is set to be the same as the timing for exhaust valve closure.

## Description

### Field of Invention

The present invention is applicable to large two-cycle diesel engines and relates to internal combustion engines equipped with an exhaust valve in the cylinder cover, and additionally, having a plurality scavenging air holes established radially in the lower part of the cylinder liner to deliver scavenging air to the inside of the combustion chamber, and further, employing a scavenging control valve that can vary the area of the aperture of the scavenging air passage leading to the combustion chamber.

### Related Art

The uniflow scavenging method is usually employed in large two-cycle diesel engines. It involves forming scavenging holes comprised of a plurality of radial holes in the lower part of the cylinder liner just prior to the bottom dead position of the piston that supply scavenging (air) to the inside of the cylinder, while the residual combustion gases inside said cylinder are pushed out through an exhaust valve in the cylinder cover.

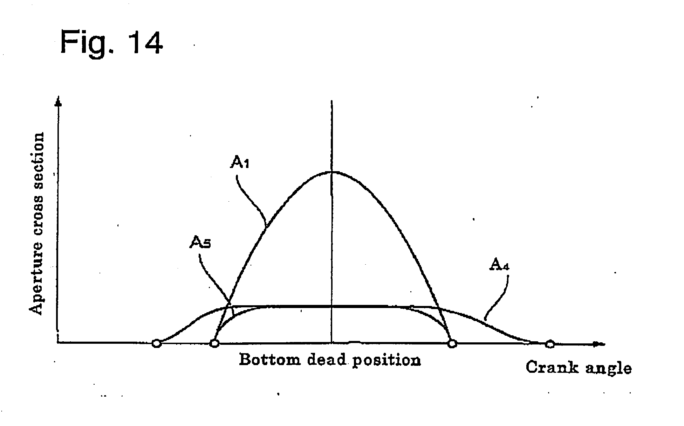

Figure 14 shows a diagram of scavenging/exhaust area at corresponding crank angles of the aperture for a large, two-cycle diesel engine with a uniflow scavenging system, wherein A₁ is the area of the aperture of the scavenging air holes, A₄ is the area of the aperture of the exhaust valve port, and A₅ is the area of the aperture of the synthesized combination of the said scavenging holes and exhaust valve passages, to wit, the computed effective area of the apertures.

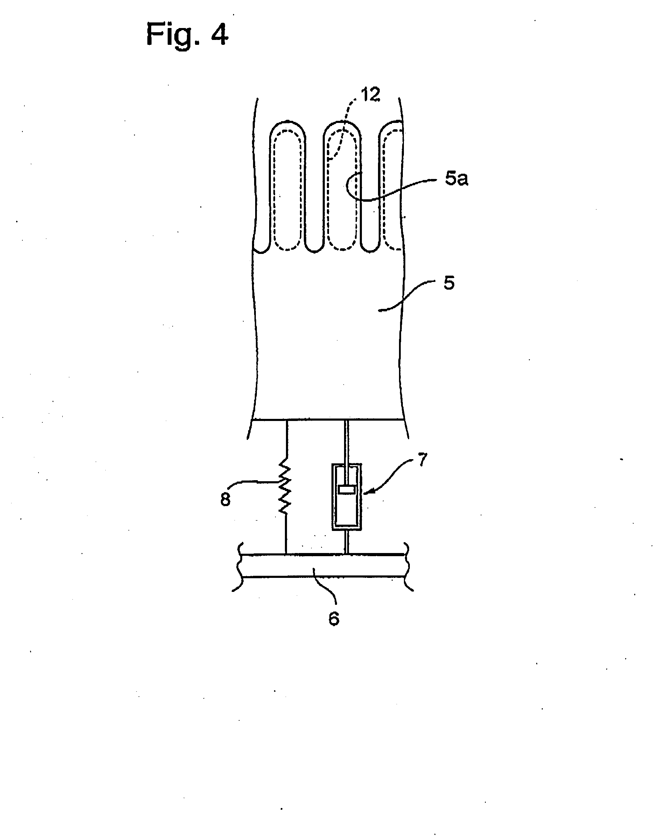

For such uniflow scavenging of large two-cycle diesel engines, as proposed in Japanese Patent Application Publication No. 7-324626, a scavenging control valve that opened and closed the scavenging holes was used as the means to adjust the computed effective area of the aperture for the combined passage of the scavenging holes and exhaust valve shown in Fig. 4.

The technology in the above-cited Japanese Patent Application Publication No. 7-324626 for uniflow type large two-cycle diesel engines involved establishing a plurality of auxiliary scavenging holes in the radial direction above the scavenging holes, and employing a scavenging control valve on the outside of the cylinder liner, to open and close the foregoing auxiliary scavenging holes by means of its sliding along the outer surface of the cylinder liner in its axial direction to thereby vary the area of the aperture of the scavenging air passage leading to the combustion chamber.

Diesel engines described in the foregoing Japanese Patent Publication No. 7-324626 were structured to rely upon scavenging control valves that slid in the axial direction on the outsides of the cylinder liners to vary the area of the aperture for the scavenging holes to vary the area of the aperture of the auxiliary scavenging holes as a means to adjust the effective computed passage area of the aperture for the scavenging holes and exhaust valves. The timing for the opening and closing of the scavenging holes and exhaust valves was basically the timing that is illustrated in Figure 14.

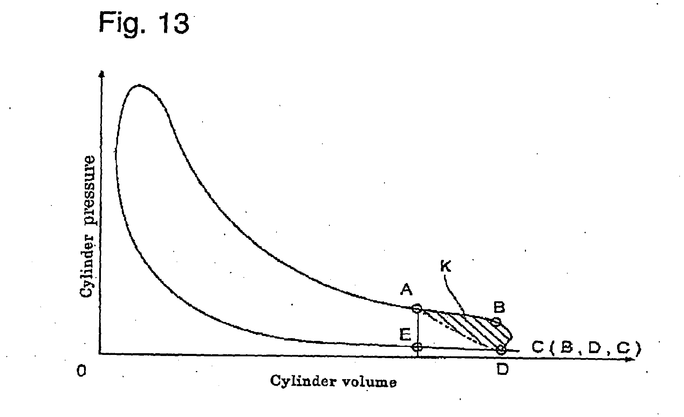

To wit, in this technology of the prior art, since the scavenging holes are open on the down stroke of the piston, in order to avoid the problem of fire, etc. being generated in the scavenging chamber from the reverse flow into the scavenging holes by the high temperature, high pressure operating gas, the exhaust valve began to open at point A in Figure 13 to allow the operating gases to flow out through the exhaust valve and complete the high pressure exhausting prior to the opening of the scavenging holes, which resulted in an effective loss in work as shown at area K. Then even after the closing of the scavenging holes, since the exhaust valve was open, during this interval, the residual combustion gases inside the cylinder were expelled from the exhaust valve toward the supercharger side by the scavenging air from the scavenging holes, which resulted in this new air being expelled from the cylinder through the exhaust to thereby generate a flow-loss. Such flow losses reduce the thermal efficiency of the engine and inhibit the reduction of fuel consumption.

Further, with the above described conventional technology, since the scavenging holes remain open just prior to the descending piston reaching bottom dead position, the scavenging of the combustion chamber is inhibited by the descending movement of the piston wherein the direction of the descending movement is opposite the direction of the scavenging flow toward the top of the combustion chamber, thereby making it difficult to maintain a high scavenging efficiency.

Further, this conventional technology establishes on the outside of the cylinder liner a scavenging valve that opens and closes the auxiliary scavenging holes which are radially established above the scavenging holes, and since it is sliding of this scavenging control valve axially along the outside of the cylinder liner that changes the area of the aperture of the scavenging passage, even if said scavenging control valve fully closes all of the auxiliary scavenging holes and the first piston ring closes the scavenging holes, gas does flow through the gap in the piston ring, which means that it is virtually impossible to completely close the scavenging air passage.

Thus, not only was it impossible in the prior art to accurately control the pattern of the opening's area to achieve the target area of the aperture of the scavenging passage, but said design had problems that tended to diminish the longevity of the piston rings and cylinder liner, and increase the consumption of lubricating oil.

### Summary

The present invention was developed after considering the problems associated with the prior art, and it has as its objectives to provide an internal combustion engine equipped with a scavenging control valve which can maximize the effective work performed by operating gas during the down stroke of the piston, improve the thermal efficiency and reduce fuel consumption by minimizing the flow loss of the inflow of the scavenging air in the combustion chamber flowing out from the exhaust port and increasing the elective work; further improve the scavenging efficiency by using the movement of the piston to promote the inflow of the scavenging air; exercises accurate control over the area of the aperture of the scavenging passage to the target aperture area by maintaining a good seal between the cylinder liner and the scavenging control valve sliding thereupon; and in addition, enables the complete closing of the scavenging passage to prevent the blow back of the operating gases to thereby improve the longevity of the piston rings and cylinder liner, and reduce the consumption of the lubricating oil injected into the cylinders.

To achieve the foregoing objectives, the first invention provides an internal combustion engine equipped with a plurality of scavenging holes in the lower part of the cylinder liner running along the circumferential direction to bring scavenging air into the combustion chamber, and an exhaust valve in the cylinder cover, comprising: a scavenging control valve for changing the area of the aperture of the scavenging air passage to the cylinder, which is slidably mounted to either the inner surface or outer surface of the cylinder liner to open and close the scavenging holes; and a valve operating device to drive said scavenging control valve in response to the engine's crank angle, wherein said valve operating device controls said scavenging control valve to synchronize the closing timing of the scavenging passage after the bottom dead position with the timing of exhaust valve closure.

The preferred structure for the first invention includes a crank angle detection means to detect the engine's crank angle and an engine operating state detection means which detects such operational status as the engine RPM and engine load, wherein the drive to the foregoing scavenging control valve is based upon respective inputs of the values detected for the crank angle from the crank angle detection means and the detected inputs from the foregoing engine operating status detection means.

This first invention controls the aperture of the scavenging control valve using the valve operating apparatus to close the scavenging holes on the piston down stroke as a means of obtaining the maximum possible amount of effective work prior to the opening of the exhaust valve, and further, after the bottom dead position of the stroke, the timing for the closure of the scavenging passage is set to be the same as the timing for exhaust valve closure, which prevents the problem encountered in the prior art of the exhaust valve remaining open after the closure of the scavenging air holes to allow gases inside of the cylinder to be expelled toward the exhaust side, to thereby increase the work done by the gases inside the cylinder, improve the thermal efficiency of the engine and reduce fuel consumption.

Also, as stated above, keeping the scavenging passage closed at the same time while the exhaust valve is closed prevents the gases inside the cylinder from being forced out of the exhaust side, and makes possible the supply of high temperature exhaust gas to the supercharger and exhaust gas recovery system, which not only increases the exhaust gas energy that drives the supercharger, but improves the waste heat recovery efficiency in the exhaust gas heat recovery system.

Further, when a conventional variable capacity supercharger is installed as the supercharger, the scavenging volume control using this scavenging control valve device may be linked with the capacity control for the supercharger to facilitate the linking of control of the exhaust gas flow to the supercharger with the capacity of the supercharger, a method to maintain the engine at a high thermal efficiency to inhibit its NOx emissions.

Further, by using the scavenging control valve to allow the area of the aperture of the scavenging air passage to be freely reduced to reduce the amount of new air that flows into the cylinder, it is possible to reduce excess air that flows into the cylinder to thereby create a reducing environment inside the combustion chamber, which has an effect similar to that of EGR (exhaust gas recirculation) in controlling NOx emissions.

In addition, by detecting the engine operating state, including the engine RPM and engine load, and using the detected values for said engine's operating state to control the foregoing scavenging control valve, it is possible to variably optimize the area of the aperture of the scavenging air passage to the operating state of the engine, which maintains the engine at a high thermal efficiency even while inhibiting NOx emissions.

It is further desirable in the first invention to employ a structure that sets the beginning of the opening timing of for said scavenging control valve to be timed just after the bottom dead position of the stroke.

Such a structure begins the scavenging operation just after the piston's shoulder portion reaches bottom dead position, when it begins ascending, to thereby gain the advantage of linking the scavenging inflow velocity with the upward movement of the piston to strengthen the scavenging action in the combustion chamber, and allow a high scavenging efficiency to be maintained with but little flow volume of scavenging air.

The second invention comprises an internal combustion engine having a plurality of holes established radially in the lower part of the cylinder liner that supply scavenging air to the combustion chamber, which is characterized in that the aperture of the foregoing scavenging air passage may be varied by moving a scavenging control valve with respect to the crank angle of the engine through the use of a scavenging control valve slidably installed with respect to the inner surface of said cylinder liner that can vary the area of the aperture of the scavenging air passage to the combustion chamber to open and close the foregoing scavenging holes established therein and a valve operating device to drive the foregoing scavenging control valve based upon the engine's crank angle.

Specifically, the foregoing scavenging control valve has the following structure.

To wit, in a first constitution, the foregoing scavenging control valve can, by means of the foregoing valve operating apparatus, be a rotating type of scavenging control valve which can reversibly be rotated in the circumferential direction on the inner surface of the foregoing cylinder liner.

Preferably, with such a rotating type of scavenging control valve, its height (H₂) in the axial direction of the cylinder liner should be formed to be less than the height (H₁) from the top surface of the first piston ring to the bottom surface of the bottommost piston ring.

Also, in a second constitution of the foregoing scavenging control valve, the foregoing valve operating apparatus causes the foregoing scavenging control valve to reversibly reciprocate in the axial direction of the cylinder liner on the inner surface of the foregoing cylinder liner.

According to said second constitution, the scavenging control valve is slidably installed on the inner surface of the cylinder liner and its movement opens and closes the scavenging hole in that liner to vary the area of the aperture the scavenging air passage to the combustion chamber. Thus through the use of either a rotating type of scavenging control valve that rotates in the circumferential direction on the inside of the cylinder liner or the use of a reciprocating scavenging control valve that slides reciprocally in the axial direction along the inside of the cylinder liner as the scavenging control valve, it is possible to maintain a good seal between the sliding areas of the scavenging control valve and the cylinder liner, and vary the area of the aperture of the scavenging air passage freely from a fully open to a fully closed state. This makes it possible to exert accurate control over the pattern of aperture area by varying the area of the aperture of the opening of the scavenging air passage to the target values.

Further, with either the rotating type of scavenging control valve or reciprocating type of scavenging control valve as the scavenging control valve, since the holes in the cylinder liner are opened and closed by the sliding action of the valve on the inner surface of the cylinder liner, when the scavenging passage is closed, the maintenance of a good seal between the sliding areas scavenging control valve and the cylinder liner makes it possible to completely close off the scavenging passage, to thereby hold the operating gas blow back from the scavenging passage to zero, which improves the longevity of the piston rings and cylinder liners, and reduces the consumption of the lubricating oil in the cylinders.

Furthermore, by lengthening the scavenging control valve, when using either the rotating type of scavenging control valve or reciprocating type of scavenging control valve, it is possible to employ taller scavenging holes than that of the prior art while maintaining the same area of the aperture for the scavenging air passage, to thereby increase proportion of the scavenging hole height in order to improve scavenging efficiency.

Further, it is preferable in the second invention to add an oil injection apparatus which forcibly injects lubricating oil onto the sliding surfaces of the foregoing scavenging control valve and cylinder liner.

With such a structure, the sliding surfaces of the scavenging control valve and cylinder liner, where gases from the inside of the cylinder otherwise would be prone to enter, can be adequately lubricated to maintain good operability of the scavenging control valve and prevent it from galling.

Also preferable in the second invention is the use of a surface treatment such as nitriding on the sliding surface of foregoing scavenging control valve to make it stronger than the base material of the cylinder liner.

Such a construction makes the scavenging control valve highly resistant to wear and improves its longevity.

Further, in a third constitution of the foregoing scavenging control valve, the cylinder liner is provided with a drive link opening at a position where the slidable scavenging control valve can seal said opening, and the driver unit and the scavenging control valve is connected by a drive link through this driver link opening. This configuration can minimize the weight of the control valve which is fabricated from a higher strength material, and can lower the fabrication cost.

### Brief Description of the Drawings

Figure 1 is a cross sectional diagram of the principal parts of the scavenging control valve according to the first preferred embodiment of this invention, along the center line of a cylinder in a large, two-cycle diesel engine using uniflow scavenging.
Figure 2 is a perspective view in the direction of arrows A-A of Figure 1.
Figure 3 shows a second embodiment in the same manner as Figure 1 (cross sectional diagram of the principal parts along the center line of the cylinder).
Figure 4 is a perspective view in the direction of arrows B-B of Figure 3.
Figure 5 shows a third embodiment in the same manner as Figure 1 (cross sectional diagram along the center line of the cylinder).
Figure 6 is a perspective view in the direction of arrows C-C of Figure 5.
Figure 7 shows a fourth embodiment in the same manner as Figure 1 (cross sectional diagram along the center line of the cylinder).
Figure 8 is a perspective view in the direction of arrows D-D of Figure 7.
Figure 9 (A) shows a fifth embodiment in the same manner as Figure 1 (cross sectional diagram along the center line of the cylinder), and Figure 9(B) is a perspective view in the direction of arrows E-E of Figure 9(A).
Figure 10 (A) shows a sixth embodiment in the same manner as Figure 1 (cross sectional diagram along the center line of the cylinder), and Figure 10 (B) is a perspective view in the direction of arrows F-F of Figure 10(A).
Figure 11 is an abbreviated cross sectional diagram along the center line of the cylinder, two-cycle diesel engine using uniflow scavenging to which the present invention may be applied.
Figure 12 is a graph of the area of the aperture of the scavenging passages for the foregoing embodiments.
Figure 13 is a graph showing the cylinder pressure for the foregoing embodiments.
Figure 14 is a graph of the area of the aperture of the scavenging passages according to the prior art.

### Embodiments

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

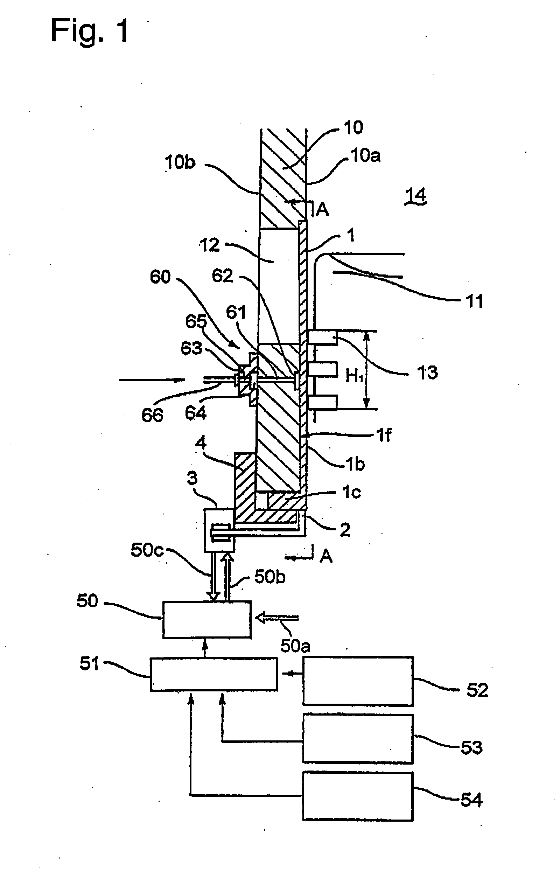

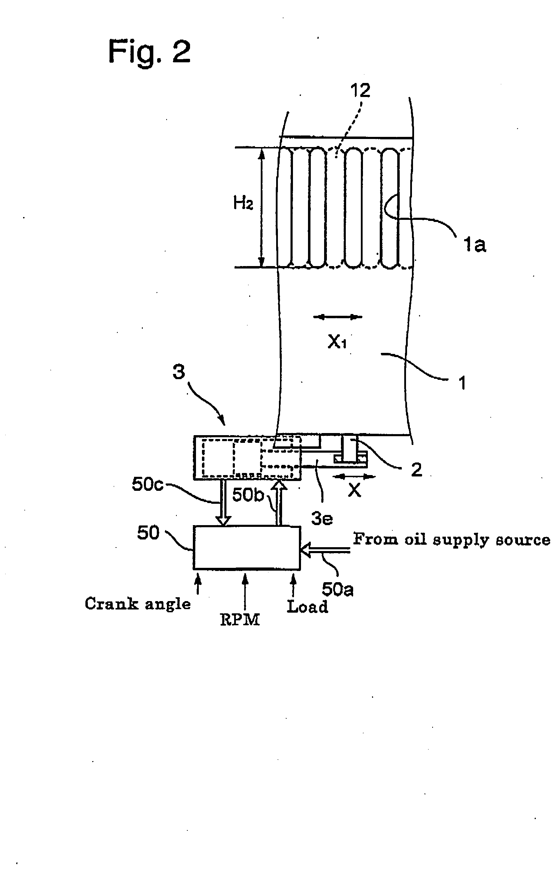

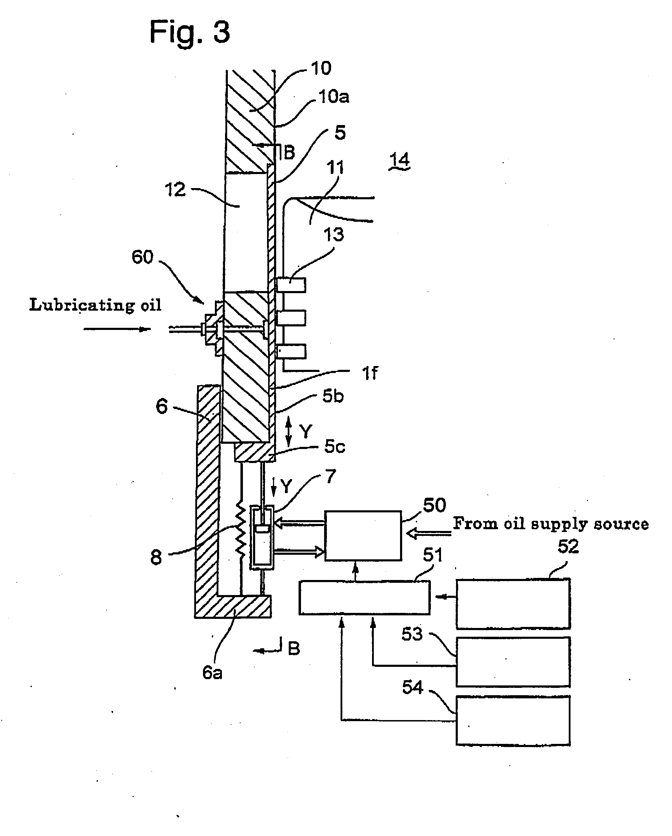

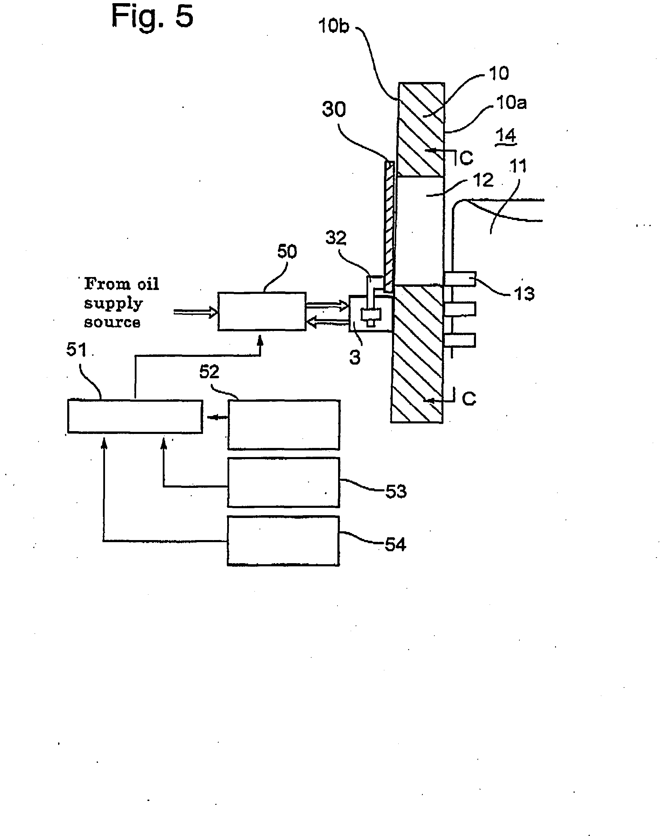

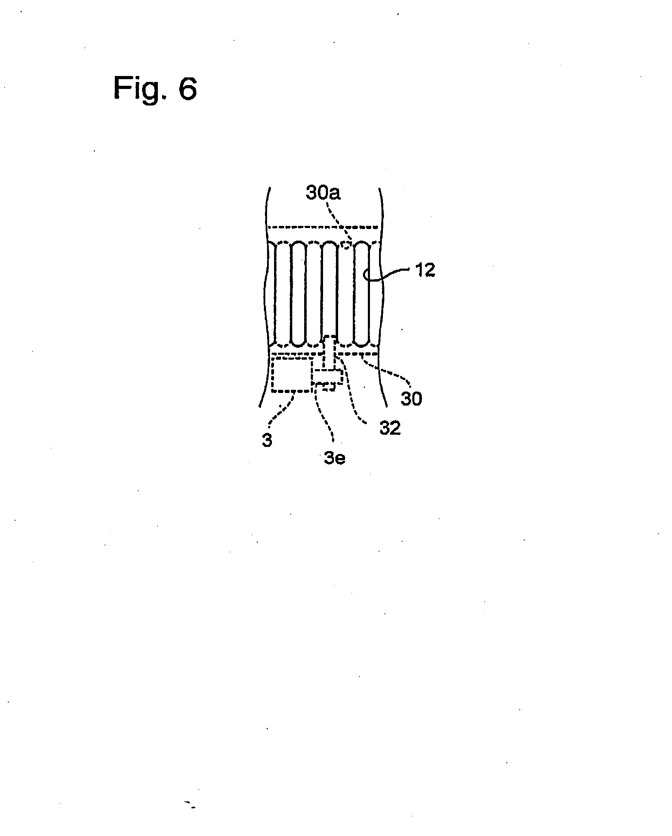

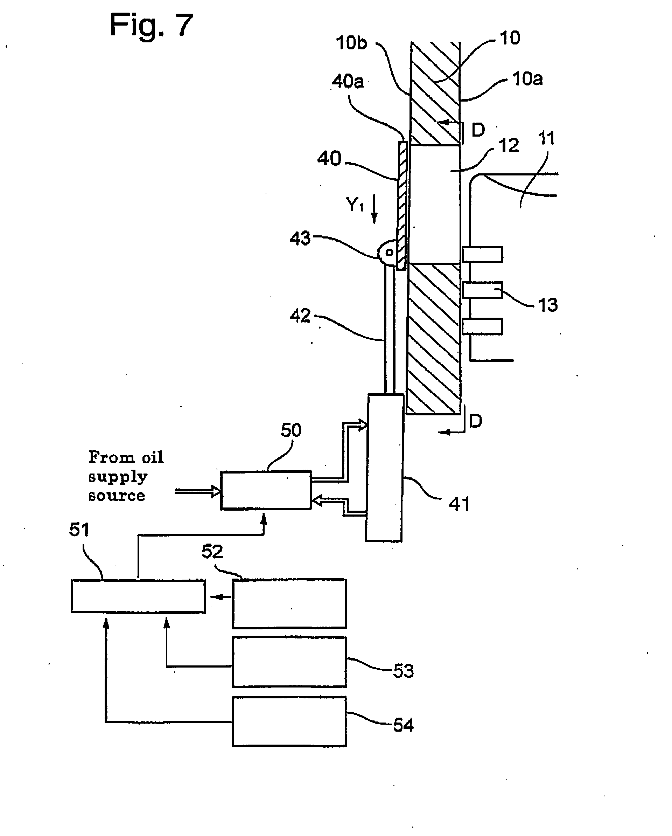

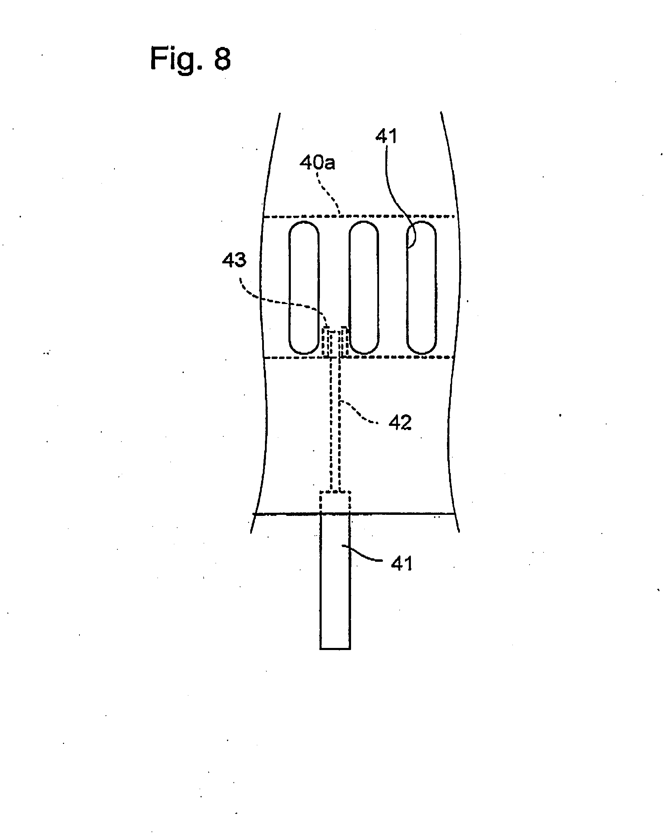

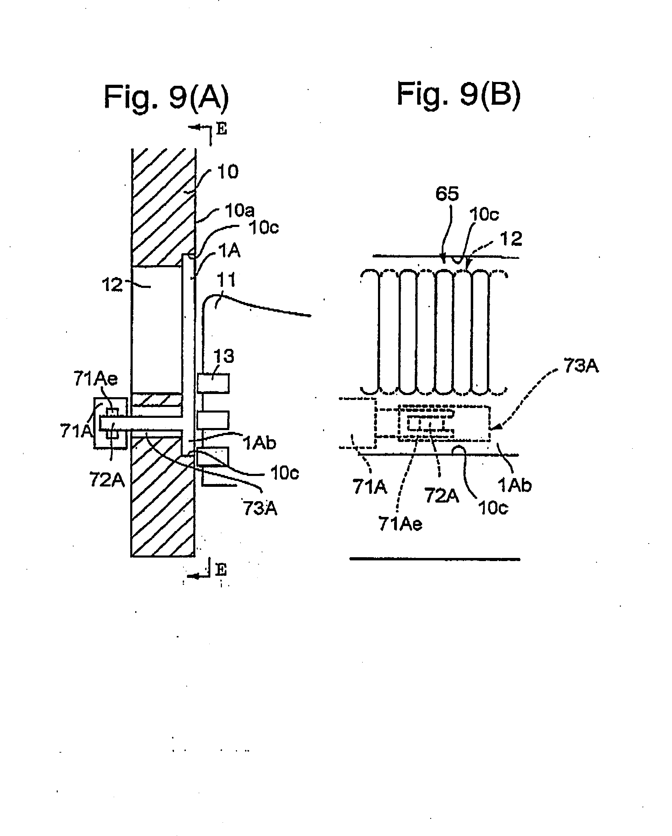

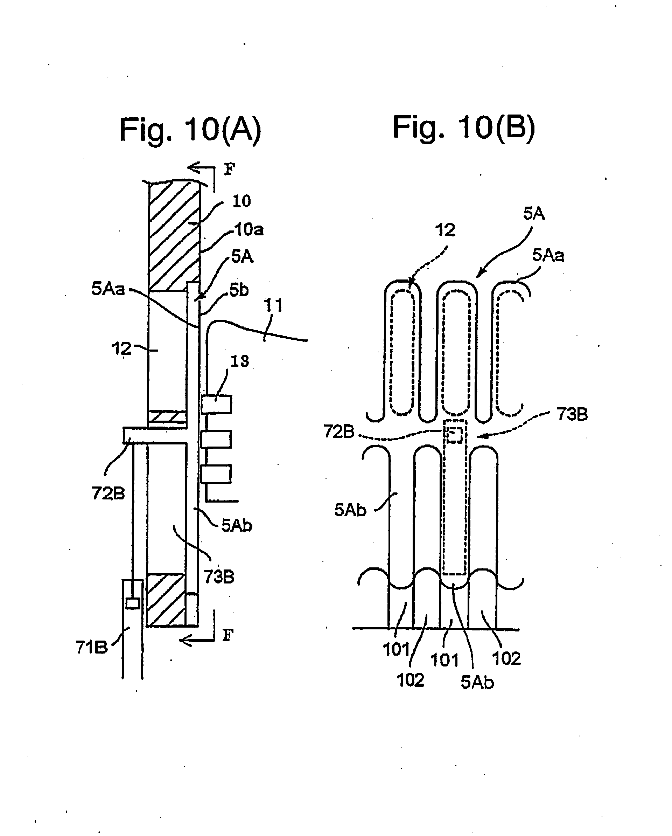

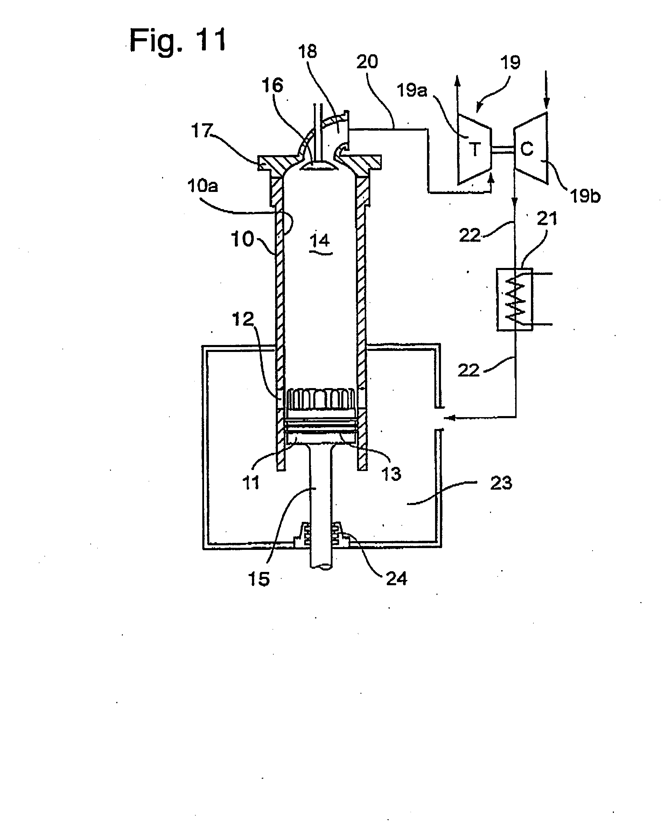

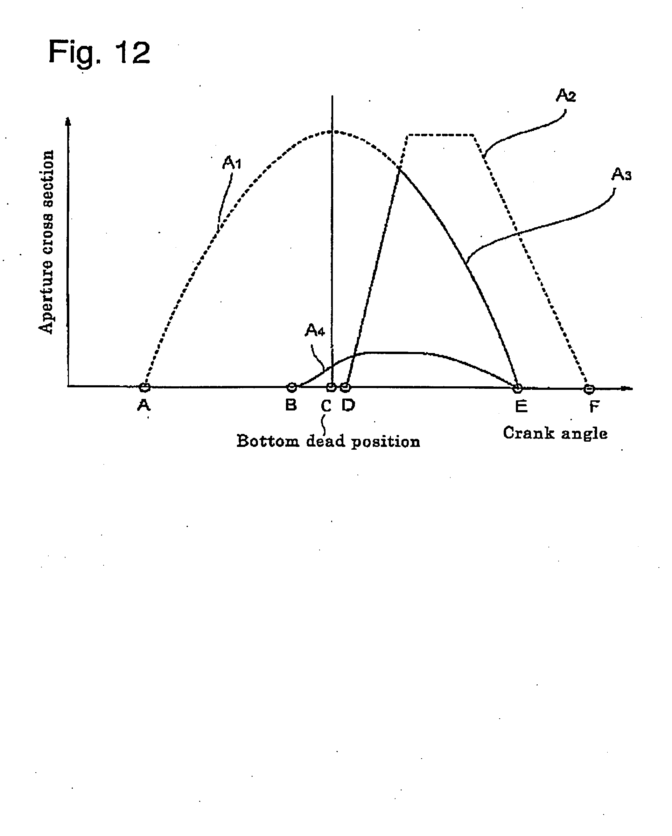

Figure 1 is a cross sectional diagram of the principal parts of the scavenging control valve according to the first preferred embodiment of this invention, along the center line of a cylinder in a large, two-cycle diesel engine using uniflow scavenging. Figure 2 is a perspective view in the direction of arrows A-A of Figure 1. Figure 3 shows a second embodiment in the same manner as Figure 1 (cross sectional diagram of the principal parts along the center line of the cylinder). Figure 4 is a perspective view in the direction of arrows B-B of Figure 3. Figure 5 shows a third embodiment in the same manner as Figure 1 (cross sectional diagram along the center line of the cylinder). Figure 6 is a perspective view in the direction of arrows C-C of Figure 5. Figure 7 shows a fourth embodiment in the same manner as Figure 1 (cross sectional diagram along the center line of the cylinder). Figure 8 is a perspective view in the direction of arrows D-D of Figure 7. Figure 9 (A) shows a fifth embodiment in the same manner as Figure 1 (cross sectional diagram along the center line of the cylinder), and Figure 9(B) is a perspective view in the direction of arrows E-E of Figure 9(A). Figure 10 (A) shows a sixth embodiment in the same manner as Figure 1 (cross sectional diagram along the center line of the cylinder), and Figure 10 (B) is a perspective view in the direction of arrows F-F of Figure 10(A). Figure 11 is an abbreviated cross sectional diagram along the center line of the cylinder, two-cycle diesel engine using uniflow scavenging to which the present invention may be applied. Figure 12 is a graph of the area of the aperture of the scavenging passages for the foregoing embodiments. Figure 13 is a graph showing the cylinder pressure. Figure 14 is a graph of the area of the aperture of the scavenging passages according to the prior art.

In Figure 11 which shows the structure of a large, two-cycle diesel engine employing uniflow scavenging to which the present invention may be applied, 10 is a cylinder liner, 11 is a piston, 13 are piston rings, 15 is a piston rod, 10a is a inner surface (sliding surface) of the cylinder liner along which piston 11 and piston rings 13 slide, 14 is a combustion chamber, 17 is a cylinder cover, 16 is an exhaust valve, 18 is an exhaust port, 23 is a scavenging chamber and 24 is a sealing gasket.

12 represents a plurality of scavenging holes located at the bottom of the foregoing cylinder liner 10, and the scavenging air (air) inside the foregoing scavenging chamber 23 passes through said scavenging air holes 12 to enter the foregoing combustion chamber 14.

19 is a supercharger. Exhaust gases inside the foregoing combustion chamber 14 pass through the open exhaust valve 16, exhaust pipe 18, and exhaust pipe 20, to drive turbine 19a of the supercharger 19, before being directed to a waste heat recovery apparatus where their heat is recovered.

Compressor 19b, which is coaxially driven by turbine 19a of supercharger 19, compresses air (scavenging air), which passes through air supply pipe 22 and enters the air intercooler 21, wherein said intercooler 21 cools and reduces the temperature of the air before it is stored in scavenging air chamber 23 and flows into combustion chamber 14 via the foregoing scavenging air holes 12, to force the residual combustion gas from the inside of combustion chamber 14 toward exhaust valve 16. The above described structure is similar to that found in conventional large, two-cycle diesel engines employing uniflow scavenging.

The present invention relates to a scavenging control valve that opens and closes the scavenging air holes in the foregoing cylinder liner 10.

In the first embodiment of the present invention depicted in Figures 1 and 2, 1 represents a rotary type scavenging control valve, which is attached onto inner surface 10a of the foregoing cylinder liner 10 where it can reversibly rotate in the circumferential direction of said cylinder liner 10. The inner surface of said rotary type scavenging control valve 1, to wit, scavenging control valve inner surface 1b, is formed to be continuation of the same surface (same diameter) of inner surface 10a of cylinder liner 10 against which the foregoing piston rings 13 slide.

As shown in Figure 2, the foregoing rotary type scavenging control valve 1 has control valve openings 1a running along its circumferential direction. Said control valve openings 1a are the same shape and located at the same spacing as the foregoing scavenging air holes 12, and as shown in Figure 2, when the control valve openings 1a lie between the respective scavenging air holes 12, those scavenging air holes 12 are fully closed, but as the control valve is displaced to move the control valve openings 1a in the circumferential direction, the aperture area of the scavenging air holes 12 increases to the point where control valve openings 1a overlap scavenging air holes 12 wherein the scavenging air holes are fully open to their maximum aperture area.

Further, the foregoing scavenging control valve openings 1a are formed in a manner such that their height H₂ in the axial direction of the cylinder liner is less than the height H₁, which is the distance between the top surface of the first of the foregoing piston rings 13 and the bottom surface of the bottommost piston ring. With such a structure, when the scavenging control valve 1a is fully closed, it is possible to positively prevent any leakage of gases to the outside in the area of piston rings 13.

Further still, said rotary type scavenging control valve 1 is fabricated from a higher strength material, such as stainless steel, than the foregoing cylinder liner 10, and it further maintains a high resistance to wear by using a surface treatment such as carburizing or nitriding in the areas of the inner surface 1b where it is in sliding contact with said cylinder liner 10.

4 is a control valve support that is affixed to the bottom outside circumference of cylinder liner 10 by a plurality of bolts (not shown), and it slidably supports the bottom area (projection 1c) of the foregoing rotary type scavenging control valve 1 between itself and the bottom surface of cylinder liner 10.

3 is a hydraulic cylinder attached to the outer surface of the foregoing control valve support 4 by a plurality of bolts (not shown). 2 is a drive link that joins piston rod 3e, i.e. an output shaft of said hydraulic cylinder 3, with the bottom (the foregoing bottom projection 1c) of the foregoing scavenging control valve 1. When piston rod 3e of the foregoing hydraulic cylinder 3 moves reciprocally in the direction shown by arrow X in Figure 2, the sliding of bottom projection 1c of the foregoing rotary type scavenging control valve 1 causes reciprocal motion in the circumferential direction (in the direction of arrow X₁).

62 is an oil groove formed circumferential in the inner surface of cylinder liner 10 along which the foregoing rotary type scavenging control valve slides. 61 represents a plurality of oil holes which are formed in the circumferential direction of cylinder liner 10 and which connect the outer surface 10b of cylinder liner 10 with the foregoing oil groove 62.

60 is an oil injection device comprised of a ring-shaped casing 63 that is secured to outer surface 10b of the cylinder liner 10 by a plurality of bolts (not shown); formed round its inner surface is an oil groove 64 which connects to the foregoing oil holes 61, while holes 65 formed in said case 63 pass to the oil grove 64. 66 is an oil injection pipe through which lubricating oil (which may be lubricating oil from another system) from a cylinder oil injector (not shown) flows, to generate a flow from oil holes 65, via oil groove 64, into the oil holes 61 in cylinder liner 10, and then from oil holes 61 through oil groove 62 to thereby lubricate the sliding areas 1f between the foregoing rotary scavenging control valve 1 and cylinder liner 10.

The foregoing oil injection device 60 provides lubricant adequate to prevent what would otherwise be the easy penetration of gases from combustion chamber 14 into the sliding area 1f between rotary type scavenging control valve 1 and cylinder liner 10. This maintains excellent operating characteristics for said rotary type scavenging control valve 1 and prevents galling in the foregoing sliding area 1f.

52 is a crank angle detector that detects the engine's crank angle, 53 is an RPM detector that detects engine RPM, and 54 is a load detector that detects the engine load (engine output). 50 is an electromagnetic valve that opens and interrupts the supply of operating oil to hydraulic cylinder 3 and 51 is a valve opening and closing control device that exerts opening and closing control on said electromagnetic valve 50. 50a an operating oil supply line that connects from an operating oil source (not shown) to supply operating oil to the inlet of the foregoing electromagnetic valve 50, and 50b and 50c are operating oil lines that connect the foregoing electromagnetic valve 50 with the oil chamber (not shown) of the foregoing hydraulic cylinder 3.

The crank angle detection signal from the foregoing crank angle detector 52, the RPM detection signal from the foregoing RPM detector 53, and the detection signal for engine load (engine output) from load detector 54 are input into the foregoing valve opening and closing control device 51.

The operation of said first embodiment now will be explained with references to Figures 1 and 2, and Figures 12 and 13.

Based upon the detection signals comprising the crank angle detection signal from the foregoing crank angle detector 52, the engine RPM detection signal from the RPM detector 53, and the engine load (engine output) detection signal from the load detector 54, the foregoing valve opening and closing control device 51 performs the opening and closing timing for the foregoing electromagnetic valve 50 and the duration of the exhaust valve opening. Said electromagnetic valve 50 connects and interrupts operating oil supply line 50a to operating oil supply lines 50b, 50c loading to the foregoing hydraulic cylinder 3.

As a result, when the foregoing rotary type scavenging control valve 1 has its valve openings 1a overlapping scavenging air holes 12 to fully open the scavenging air holes 12, the aperture area of the scavenging passage between the foregoing scavenging chamber 23 and combustion chamber 14 is as shown by A₁ in Figure 12.

Accordingly, when scavenging air holes 12 are fully opened by rotary type scavenging control valve 1 as previously described, as piston 11 descends in the combustion stroke, as shown in Figure 12 at point A, after the control valve openings 1a of the foregoing rotary type scavenging control valve 1 are folly opened, and piston 11 ascends from bottom dead position C, the shoulder portion of the piston, up until the time when the control valve openings 1a are closed at point E, changes the aperture cross section of the scavenging passage as shown by A₁ in Figure 12.

As illustrated in Figure 2, when the control valve openings 1a of the foregoing rotary type scavenging control valve 1 are positioned between the scavenging air holes 12, said rotary type scavenging control valve 1 closes all of the scavenging air holes 12, and the area of the aperture of the foregoing scavenging air passage is zero (fully closed).

When the aperture of the scavenging air passage is fully closed, the detection signal from the foregoing crank angle detector 52 is input into the foregoing valve opening and closing control device 51 after the piston passes bottom dead position C and arrives at D. Said valve opening and closing control device 51 then switches the electromagnetic valve 50 to connect operating oil supply lines 50b, 50c of foregoing hydraulic cylinder 3 with operating oil supply line 50a to cause the hydraulic cylinder 3 to move the foregoing rotary type scavenging control valve 1 in the circumferential direction from the fully closed state (in the direction of arrow X₁ in Figure 2), and begin the opening of said rotary type scavenging control valve 1.

In the case where the foregoing shoulder portion of the piston does not close all or a part of the control valve openings 1a of the rotary type scavenging control valve 1, the area of the aperture of said rotary type scavenging control valve 1 varies as shown by A₂ in Figure 12, following the movement in the circumferential direction of the rotary type scavenging control valve 1. Following the reaching of bottom dead position C, at point D the rotary type scavenging control valve 1 begins to open, and then it closes at point F.

Naturally, in the present embodiment, since at the same time the aperture of the foregoing rotary type scavenging control valve 1 increases as it moves from the fully closed position, piston 11 ascends from bottom dead position C so that the shoulder portion of the piston begins closing the control valve openings 1a in their axial direction, and accordingly, the actual area of the aperture for the foregoing scavenging air passage is as shown by A₃ in Figure 12. As will be described below, at point E, the foregoing exhaust valve 16 closes earlier than the above described point F.

On the other hand, the area of the aperture of the foregoing exhaust valve 16 (see Figure 11) begins increasing at point B just prior to the aforementioned bottom dead position C as shown by A₄ in Figure 12.

Then, in the present embodiment, the foregoing valve opening and closing control device 51 controls the actual area of the aperture A₃ of the scavenging air passage and the aforementioned area of the aperture A₄ of the exhaust valve to zero at the same crank angle; to wit, after bottom dead position C, the closing timing for the scavenging passage is controlled by the opening and closing control of the foregoing rotary type scavenging control valve 1, which is controlled by foregoing valve opening and closing control device 51, to be the same timing as the closing timing for the exhaust valve, as shown by E in Figure 12.

The opening and closing timing of the foregoing rotary type scavenging control valve can be varied according to the engine RPM as detected by the foregoing RPM detector 53 and the engine load (engine output) as detected by the load detector 54.

According to the first embodiment, by controlling the aperture of the foregoing rotary type scavenging control valve 1 by means of the foregoing valve opening and closing control device 51, following the reaching of bottom dead position C, the closing timing for the scavenging air passage and the closing timing for exhaust valve 16 can be kept to the same timing (see E in Figure 12), which means that when the foregoing scavenging air passage is closed, exhaust valve 16 is also closed. Thus, there is no problem as in the prior art, whereby the exhaust valve remained open even after the closing of scavenging air holes 12, which allowed new air inside combustion chamber 14 to be forced out into exhaust pipe 20 to generate a flow loss of the new air. It is further possible, by closing scavenging air holes 12 during the down stroke of piston 11, and delaying the opening of exhaust valve 16 to the maximum extent, it is possible to maximize the effective work of the engine, as shown by the area indicated by K in Figure 13, which corresponds to the amount that the effective work by the gases in the cylinder has been increased.

The reference labels A, B, C, D and E in Figure 13 correspond to the same labels in Figure 12.

Further, since the operation of foregoing rotary type scavenging control valve 1 can be adjusted by the foregoing valve opening and closing device 51 to the operational state of the engine, by inputting information such as engine RPM, engine load (engine output) and the like into the foregoing valve opening and closing device 51, it is possible to optimize the area of the aperture of the scavenging air passage to the ongoing engine operating state, which inhibits NOx emissions and maintains a high thermal efficiency for the engine.

Also, by keeping the scavenging air passage closed while exhaust valve 16 is closed as described above, new air in combustion chamber 14 is prevented from being forced out into exhaust pipe 20, which makes it possible to supply high temperature exhaust to supercharger 19 and the exhaust gas heat recovery system (not shown). This not only increases the energy of the exhaust gas that drives the foregoing supercharger 19, but it also increases the efficiency of the waste heat recovery by the foregoing exhaust gas heat recovery system.

Further, the structure is such that by means of the foregoing valve opening and closing device 51, it is possible to set the opening timing for the foregoing scavenging air passage via the foregoing rotary type scavenging control valve 1 to begin at point D, after the bottom dead position C in order that the scavenging operation begin after bottom dead position C on the upstroke of piston 11, which, in conjunction with the ascent of piston 11, aids and strengthens the scavenging action in combustion chamber 14. This maintains high scavenging efficiency with but little flow of scavenging air.

Further still, because the foregoing rotary type scavenging control valve 1 is rotatably and reversibly attached on inner surface 10a of cylinder liner 10 to open and close scavenging holes 12 as a means to vary the area of the aperture of the foregoing scavenging air passage by its movement in the circumferential direction along inner surface 10a of cylinder liner 10, it is possible to achieve a good seal at the sliding area 1f of the rotary type scavenging control valve 1 and cylinder liner 10, even while varying the area of the aperture of the scavenging air passage from the fully closed to the fully opened state, to thereby make possible the exercise of precise control over the pattern of aperture area by controlling the area of the aperture of the scavenging air passage to its target values.

Furthermore, due to the above described maintenance of a good seal at the sliding area 1f between rotary type scavenging control valve 1 and cylinder liner 10, it is possible to completely close off the scavenging air passage and bring down the amount of operating blow-back gas on the scavenging side to zero, which improves the longevity of piston rings 13 and cylinder liner 10.

In addition, by changing the width of the openings for the control valve openings 1a of the foregoing rotary type scavenging control valve 1, it is possible to vary the aperture area of the scavenging air passage, and by lengthening said control valve openings 1a in the axial direction, the height of the scavenging air holes 12 can be higher than found in the prior art and it still remains possible to maintain the same aperture area for scavenging air passage. Thus, the scavenging efficiency can be improved by increasing the height proportion of the scavenging air holes 12 with respect to the length of the piston stroke.

The second embodiment of this invention illustrated in Figures 3 and 4, shows a reciprocating type scavenging control valve 5 in which the scavenging control valve can reciprocally slide in the axial direction of cylinder liner 10 along the inner surface of the foregoing cylinder liner 10.

To wit, in Figures 3 and 4, 5 represents the reciprocating type scavenging control valve, which is attached onto said cylinder liner 10 and may reversibly slide back and forth in the axial direction on the inner surface of the foregoing cylinder liner 10. The inner surface of said reciprocating type scavenging control valve 5, which is in sliding contact with the foregoing piston rings 13, is formed to the same shape (to the same diameter) as the inside diameter of the foregoing cylinder liner 10.

As is illustrated in Figure 4, the same number of valve control areas 5a of the reciprocating type scavenging control valve 5 are formed around the control valve 5 in the circumferential direction as the number of the foregoing scavenging air holes 12. During the uppermost part of the stroke, the various valve control areas 5a, which are formed to be slightly wider than scavenging air holes 12, fully close the foregoing scavenging air holes 12, then when the reciprocating type scavenging control valve 5 begins its descent from that position, the area of the openings of scavenging air holes 12 increases, until the reciprocating type scavenging control valve 5 reaches its lowermost position where the various scavenging air holes 12 are fully open to deliver their maximum area of their collective aperture.

6 is a control valve support that is affixed to the bottom outside circumferential surface of the foregoing cylinder liner 10 by a plurality of bolts (not shown). Between a projection 5c at the bottom of the foregoing reciprocating type of scavenging control valve 5 and the lower support member 6a of said valve support 6 are a hydraulic cylinder 7 and spring 8, which cause the valve to slide reciprocally in sliding area 1f of cylinder liner 10.

7 represents the hydraulic cylinder, which is disposed between the lower projection 5c of the foregoing reciprocating type scavenging control valve 5 and the lower support member 6a of the foregoing control valve support 6. The elongation and contraction of said hydraulic cylinder causes the foregoing reciprocating type scavenging control valve 5 to reciprocally slide in the axial direction of cylinder liner 10 to thereby open and close the foregoing scavenging air holes 12. Electromagnetic valve 50, valve opening and closing device 51, etc. comprise the drive system for hydraulic cylinder 7, just as was the case for the first embodiment.

Several of the foregoing hydraulic cylinders 7 and springs 8 are disposed around the circumference of the cylinder liner 10.

In this second embodiment, when the foregoing reciprocating type scavenging control valve 5 is in its bottommost position and the scavenging air holes 12 are fully open, the area of the aperture of the scavenging air passage between the foregoing scavenging chamber 23 and combustion chamber 14 is as shown by A₁ in Figure 12.

Accordingly, when the foregoing reciprocating type scavenging control valve 5 fully opens the scavenging air holes 12, after piston 11 descends during the combustion stroke so that the shoulder portion of the piston opens the scavenging air holes 12 as shown by A in Figure 12, as piston 11 rises from bottom dead position C, the aperture area of the aperture of the scavenging air passage as shown by A₁ in Figure 12 changes up until the piston shoulder portion reaches point E when the scavenging air holes 12 are closed.

As is shown by Figure 4, when the foregoing reciprocating type scavenging control valve 5 is positioned by means of the foregoing spring 8 at its uppermost position, the valve control area 5a of said reciprocating type scavenging control valve 5 closes the scavenging air holes 12, and the area of the aperture of the foregoing scavenging air passage is zero (fully closed).

When the aperture of the scavenging air passage is in the fully closed state, and when an input is made of the crank angle detection signal into the foregoing valve opening and closing control device 51 to indicate that the first piston ring 13 has reached point D after passing bottom dead position C, then the valve opening and closing control device 51 operates the foregoing electromagnetic valve 50 to cause the foregoing reciprocating type scavenging control valve 5 to descent axially from the aforementioned fully closed position (in the direction of arrow Y in Figure 3) and begin to open said reciprocating type scavenging control valve 5. When the foregoing piston shoulder portion is not closing the scavenging air holes 12, the area of the aperture of the reciprocating type scavenging control valve 5 changes as is shown by A₂ in Figure 12 as said reciprocating type scavenging control valve 5 moves in the axial direction. Said reciprocating type scavenging control valve 5 begins opening at point D after pasting bottom dead position C, and closes at F.

It is of course the case that in the present embodiment, as the valve aperture increases from the fully closed state of the foregoing reciprocating type scavenging control valve 5, at the same time, piston 11 is ascending from the bottom dead position C, and the first of piston rings 13 closes off scavenging air holes 12, wherein due to the reduced height of said scavenging air holes 12 in the axial direction, the actual area of the aperture of the foregoing scavenging air passage is reduced as shown by A₃ in Figure 12, these are closed at point E, more quickly than at point F.

On the other hand, the area of the aperture of the foregoing exhaust valve 16 (see Figure 11) is as shown by A₄ in Figure 12: it begins to open at point B, just prior to bottom dead position C.

Thus, this second embodiment is similar to the above described first embodiment in that the foregoing valve opening and closing device 51 controls the foregoing scavenging air passage's actual aperture area A₃ and the foregoing exhaust valve's aperture A₄ to zero out at the same crank angles, to wit, following bottom dead position C, opening and closing control is exerted over the foregoing reciprocating type scavenging control valve 5 to assure that the timing of the closure of the scavenging air passage is the same timing as the valve closure timing of exhaust valve 16 (at point E shown in Figure 12).

This means that exhaust valve 16 is closed at the same time that the foregoing scavenging air passage is closed, which prevents the problem of the prior art of new air in combustion chamber 14 being forced toward the exhaust pipe 18 to generate a flow loss that resulted from the exhaust valve remaining open after the closure of the scavenging air holes.

The other actions and effects of the foregoing second embodiment are similar to those described for the foregoing first embodiment. Further, aside from the structural differences cited above, the embodiment is similar to the first embodiment, and corresponding parts bear identical reference numbers.

Figures 5 and 6 show a third embodiment in which the scavenging control valve is installed on the outer surface of the foregoing cylinder liner 10, and wherein this rotary type scavenging control valve 30 can rotate back and forth in the circumferential direction with respect to said cylinder liner.

In Figures 5 and 6, 30 represents the rotary type scavenging control valve, which is attached onto outer surface 10b of the foregoing cylinder liner 10 in a manner such that it can reversibly rotate in the circumferential direction with respect to said cylinder liner 10.

As shown in Figure 6, the foregoing rotary type scavenging control valve 30 has control valve openings 30a formed around it in the circumferential direction. Said control valve openings 30a are of the same shape and are spaced the same distance apart as the foregoing scavenging air holes 12. As also illustrated in Figure 6, the various scavenging air holes 12 are completely closed when said control valve openings 30a lie between the scavenging air holes 12. Then, when the control valve openings 30a move in the circumferential direction from that position, the area of the aperture of the scavenging air holes 12 begins to increase, and when the control valve openings 30a completely overlap scavenging air holes 12, then the scavenging are holes are in the fully open state where they exhibit their maximum aperture area.

3 represents a hydraulic cylinder, which is affixed to the outer surface of the foregoing cylinder liner 10 by a plurality of bolts not shown in the figure. 32 is a drive link which connects the lower part of the foregoing rotary type scavenging control valve 30 with piston rod 3e, which is the output shaft of said hydraulic cylinder 3. Thus, the foregoing scavenging air holes 12 may be opened and closed by piston rod 3e of the foregoing hydraulic cylinder 3 moving reciprocally in the circumferential direction of cylinder liner 10.

As illustrated in Figure 6, in this third embodiment, when the control valve openings 30a of the foregoing rotary type scavenging control valve 30 are positioned between scavenging air holes 12, those scavenging air holes 12 are closed and the area of the aperture of the foregoing scavenging air passage is zero (fully closed).

When the scavenging air passage's aperture is in the fully closed state, and when a detection signal from the foregoing crank angle detector that indicates that the piston has passed bottom dead position C and arrived at point D is input into said valve opening and closing control device 51, the electromagnetic valve 50 and hydraulic cylinder 3 move the foregoing rotary type scavenging control valve 30 in the circumferential direction from the fully closed position, which commences the opening of said rotary type scavenging control valve 30.

In the present embodiment, as shown in Figure 12, the foregoing valve opening and closing control device 51 controls the foregoing actual area of the aperture A₃ of the scavenging air passage and the area of the aperture of the foregoing exhaust valve at the same crank angle to zero; to wit, the foregoing rotary type scavenging control valve 30 is controlled in a manner such that the closing timing of the scavenging air passage after bottom dead position C and the closing timing for the exhaust valve 16 are timed to the same timing (at E shown in Figure 12). Thus, by means of the foregoing valve opening and closing control device 51 controlling the aperture of the foregoing rotary type scavenging control valve 30, the timing of the closing of the scavenging air passage after bottom dead position C is matched to the closure timing of the of exhaust valve 16, which means that the foregoing scavenging air passage is closed at the same time as exhaust valve 16, to thereby prevent the problem associated with the prior art of flow losses being generated when new air inside the combustion chamber was expelled toward the exhaust pipes because exhaust valve 16 remained open after the closing of scavenging air holes 12. Further, by closing the scavenging air holes 12 on the down stroke of piston 11 and by delaying the opening of the exhaust valve 16 to the last possible moment, it is possible to obtain the maximum effective work from the engine. As illustrated by Figure 13, area K corresponds to the amount of increase in effective work performed by the gases inside the cylinder.

Also, as previously stated, by closing the scavenging air passage simultaneously with the closing of exhaust valve 16, new air inside combustion chamber 14 is prevented from being expelled toward exhaust pipe 20 so that high temperature exhaust gas is fed to supercharger 19 and the exhaust gas heat recovery system. This in turn increases the energy of the exhaust gas that drives the foregoing supercharger 19 and improves the efficiency of waste heat recovery by the foregoing exhaust gas heat recovery system.

Further by detecting the engine RPM, engine load (engine output) and other such indicators of the operating state of the engine and inputting them into the foregoing valve opening and closing control device 51, said valve opening and closing control device 51 can optimize the operation of the foregoing rotary type scavenging control valve 30 to the operating state of the engine by varying the area of the aperture of the scavenging air passage, which suppresses the NOx emissions and improves the thermal efficiency of the engine.

Further still, since the foregoing valve opening and closing control device 51 sets the initial opening timing for the foregoing rotary type scavenging control valve 30 to begin at point D after bottom dead position C, the scavenging operation commences with the ascent of piston 11, and the inflow rate of the scavenging air and the ascent of piston 11 together perform the scavenging inside combustion chamber 14 to enable a high scavenging efficiency with but little flow volume of scavenging air.

Aside from the above, the structure is similar to that of the first embodiment and corresponding parts bear identical reference numbers.

Figures 7 and 8 show a fourth embodiment comprising a reciprocating type scavenging control valve 40 in which the scavenging control valve moves reciprocally in the axial direction of said cylinder liner 10 on outer surface 10b of the cylinder liner 10.

In Figures 7 and 8, 40 represents a reciprocating type scavenging control valve, which is of a round shape plate and is attached onto outer surface 10b of the foregoing cylinder liner 10 in a manner such that it can reciprocally slide back and forth in the axial direction of cylinder liner 10.

41 is a hydraulic cylinder that is affixed to the bottom outside circumferential surface of the foregoing cylinder liner 10 by a plurality of bolts not shown in the figure; its output piston rod 42 is fixed to the foregoing reciprocating type scavenging control valve 40 by link 43. The extension and contraction of said hydraulic cylinder 41 causes the reciprocal motion of the foregoing reciprocating type scavenging control valve 40 in the axial direction of cylinder liner 10, in a manner such that its upper edge 40a opens and closes the foregoing scavenging air holes 12. The drive system for said hydraulic cylinder 41, including the electromagnetic valve 50, the valve opening and closing control device 51, and others is similar to that of the foregoing first embodiment.

In this fourth embodiment, when the foregoing reciprocating type scavenging control valve 40 is displaced to its uppermost position, said reciprocating type scavenging control valve 40 closes the scavenging air holes 12 and the area of the aperture of the scavenging air passage is zero (fully closed).

When the scavenging air passage is in this fully closed position, the input of the detection signal from the crank angle detector into the foregoing valve opening and closing control device 51 when the piston passes bottom dead position C and reaches D causes, by means of the electromagnetic valve 50 and the valve opening and closing control device 51, the lowering of the foregoing reciprocating type scavenging control valve 40 in the axial direction of cylinder liner 10 (see Figure 7, the direction shown by arrow Y₁), from the fully closed position, and begin to open said reciprocating type scavenging control valve 40.

Then, simultaneously with the valve aperture of the foregoing reciprocating type scavenging control valve 40 increasing from the fully closed condition, piston 11 ascends from bottom dead position C until the shoulder portion of the foregoing piston begins to close the scavenging air holes 12, which due to the resulting reduction in aperture height in the axial direction of said scavenging holes 12, causes the actual area of the aperture of the foregoing scavenging air passage to be as shown by A₃ in Figure 12, and to reach an early closure at point E.

Just as was the case with the first embodiment, in this fourth embodiment, the valve opening and closing control device 51 maintains the area of the aperture A₃ of the foregoing scavenging air passage and the area of the aperture A₄ of the foregoing exhaust valve at zero over the same crank angles, to wit, after bottom dead position C, the foregoing reciprocating type scavenging control valve 40 controls the timing of the closure of the scavenging air passage to identical to the timing of the closure of exhaust valve 16 (at E shown in Figure 12).

Thus, the foregoing scavenging air passage is closed at the same time that exhaust valve 16 is closed, to thereby prevent the problem of the prior art of flow losses being generated from the new air inside combustion chamber 14 being expelled toward exhaust pipe 18 because the exhaust valve remained open after the closure of the scavenging air holes.

In this fourth embodiment, the other action and effects are similar to those obtained for the foregoing third embodiment. Also, the remaining structure is similar to the structure of the foregoing third embodiment; corresponding parts bear identical reference numbers.

In the fifth embodiment of the present invention depicted in Figures 9(A) and Figure 9(B), 1A represents a rotary type scavenging control valve, which is attached onto inner surface 10a of the foregoing cylinder liner 10 where it can reversibly rotate in the circumferential direction of said cylinder liner 10, to wit, it can reversibly rotate in the predetermined arc angle (rotary sliding type). The rotary type scavenging control valve 1A has a plurality of control valve openings 65 which are the almost same shape and spacing as the scavenging holes 12, and reversibly rotate in the circumferential direction of said cylinder liner 10 to thereby control the scavenging holes. In this embodiment, it is characterized by the configuration in which a drive link 72A extends through the drive link opening 73A of cylinder liner 10 toward the outside of the liner in order to minimize the height and weight of the scavenging control valve 1A.

As shown in Figure 9(A), the foregoing rotary type scavenging control valve 1A is attached onto inner surface 10a of the foregoing cylinder liner 10 where it can reversibly rotate in the circumferential or arc direction of said cylinder liner 10.

The foregoing rotary type scavenging control valve 1A has control valve openings 65 which are provided along the circumferential direction, and the control valve openings 65 are the same shape and located at the same spacing as the foregoing scavenging air holes 12. As shown in Figure 9(B), when the control valve openings 65 lie between the respective scavenging air holes 12, those scavenging air holes 12 are fully closed, but as the control valve is displaced to move the control valve openings 65 in the circumferential direction, the aperture area of the scavenging air holes 12 increases up to the point where control valve openings 65 overlap scavenging air holes 12 wherein the scavenging air holes are fully open to their maximum aperture area.

Further, a cover portion 1Ab is extending from the lower end of the foregoing scavenging control valve 1A in a manner such that the cover portion 1Ab covers the drive link opening 73A and forms an air tight-sealing between the cylinder liner 10 and the scavenging control valve 1A. The lower end of the cover portion 1Ab and the top portion of the scavenging control valve 1A are formed parallel so that the scavenging control valve 1A can reciprocally slide back and forth in the circumferential direction of cylinder liner 10, and the sliding area of the cylinder liner 10 has a pair of sliding guides 10c which are formed by cutting the sliding portion of the cylinder liner 10.

71A is a hydraulic cylinder attached to the outer surface which is provided near the drive link opening 73A of the foregoing control valve support 4 by a plurality of bolts (not shown). 72A is a drive link that joins piston rod 71Ae, i.e. the output shaft of said hydraulic cylinder 71A, with the lower portion of the foregoing scavenging control valve 1A. When piston rod 71Ae of the foregoing hydraulic cylinder 71A moves reciprocally in the circumferential direction of cylinder liner 10, the foregoing rotary type scavenging control valve 1A slides reciprocally on the inner surface of the cylinder liner 10, and opens and closes the foregoing scavenging air holes 12.

Further, the configuration of the electromagnetic valve 50 and the valve opening and closing control device 51 for the hydraulic cylinder 71A are the same as the first embodiment.

The operation of the scavenging control valve 1A according to the fifth embodiment is the same as the first embodiment. To wit, the rotary type scavenging control valve 1A has the drive link 72A, which extends through the drive link opening 73A of cylinder liner 10 toward the outside of the liner 10 in order to minimize the height and weight of the scavenging control valve 1A. This can minimize the weight of the moving element, to wit, the control valve 1A, and increase the controllability. Further, this can minimize the weight of the control valve 1A which is fabricated from a higher strength material, and can lower the fabrication cost.

In the sixth embodiment of the present invention depicted in Figures 10(A) and Figure 10(B), a reciprocating type scavenging control valve 5A in which the scavenging control valve can reciprocally slide in the axial direction of cylinder liner 10 along the inner surface of the foregoing cylinder liner 10 is the same as the second embodiment. In this embodiment, however, it is characterized by the configuration in which a drive link 72B extends through the drive link opening 73B which has a long slip shape and the same length as the stroke length of the reciprocating type scavenging control valve 5A. The end of the drive link is connected to the hydraulic cylinder 71B.

To wit, 5A represents the reciprocating type scavenging control valve, which is attached onto the inner surface 10a of said cylinder liner 10 and may reversibly slide back and forth in the axial direction on the inner surface of the foregoing cylinder liner 10. The inner surface 5b of said reciprocating type scavenging control valve 5A, which is in sliding contact with the foregoing piston rings 13, is formed to the same shape (to the same diameter) as the inside diameter of the foregoing cylinder liner 10.

As is illustrated in Figure 10(B), the same number of valve control areas 5Aa, which have a comb shape, of the reciprocating type scavenging control valve 5A are formed around the control valve 5A in the circumferential direction as the number of the foregoing scavenging air holes 12. During the uppermost part of the stroke, the various valve control areas 5Aa, which are formed to be slightly wider than scavenging air holes 12, fully close the foregoing scavenging air holes 12, then when the reciprocating type scavenging control valve 5A begins its descent from that position, the area of the openings of scavenging air holes 12 increases, until the reciprocating type scavenging control valve 5A reaches its lowermost position where the various scavenging air holes 12 are fully open to deliver their maximum area of their collective aperture.

The lower portions 5Ab of the valve control areas 5Aa extend downwardly just as a comb, and the lower portions 5Ab engage with sliding grooves 101 to reciprocally slide in the axial direction of cylinder liner 10. This configuration can prevent the control valve 5A from shaking during the reciprocating movement.

The width between the lower portions 5Ab is formed same as the valve control areas 5Aa or slightly narrower than the valve control areas 5Aa, and the lower end of lower portions 5Ab is U-shaped for easily engaging with the sliding groove 101.

Further, the surface portion 102, facing to the cylinder liner 10, which is the next to the sliding groove 101, is also formed U-shape, and the reciprocating type scavenging control valve 5A is positioned so as to reciprocate in the axial direction along the inner surface of the cylinder liner 10.

Furthermore, the width of the drive link opening 73B is formed narrower than the lower portion 5Ab to prevent the air from leaking through the opening.

71B represents the hydraulic cylinder, which is disposed at the lower position of the aforesaid drive link opening 73B. The elongation and contraction of said hydraulic cylinder 71B causes the foregoing reciprocating type scavenging control valve 5A to reciprocally slide in the axial direction of cylinder liner 10 to thereby open and close the foregoing scavenging air holes 12.

In this sixth embodiment, the reciprocating type scavenging control valve 5A has the drive link 72B, which extends through the drive link opening 73B of cylinder liner 10 toward the outside of the liner 10 in order to minimize the height and weight of the scavenging control valve 1A. This can minimize the weight of the moving element, to wit, the control valve 5A, and increase the controllability. Further, this can minimize the weight of the control valve 5A which is fabricated from a higher strength material, and can lower the fabrication cost.

As has been described above, the present invention controls the scavenging valve's aperture by a valve operating device, and makes it possible to keep the scavenging air holes closed during the down stroke of the piston, and match the closure timing of the scavenging air passage after bottom dead position to the closure timing of the exhaust valve to keep the scavenging air passage closed at the same time the exhaust valve is closed to thereby eliminate the problem in the prior art of gas flow losses from the new air in the combustion chamber being expelled toward the exhaust pipe due to the exhaust valve remaining open after the closure of the scavenging air holes. This makes it possible to increase the effective work done by the gases inside the cylinder, improves the thermal efficiency of the engine, and reduces fuel consumption.

Also, as stated previously, since gases inside the cylinder do not escape to the exhaust side, it is possible to supply high temperature exhaust gases to the supercharger and to the exhaust gas heat recovery system, which increases the energy of the exhaust gases that drive the supercharger, and improves the waste heat recovery efficiency of the exhaust gas heat recovery system.

Further, by setting the timing for the beginning of the scavenging air passage opening by means of the scavenging control valve, the scavenging operation commences with the beginning of the ascent of the piston in order that the combined action of the flow velocity of the scavenging air and the ascent of the piston perform the scavenging operation inside the combustion chamber to maintain a high scavenging efficiency with but little flow volume of scavenging air to thereby improve the thermal efficiency of the engine and reduce fuel consumption.

Furthermore, by having the scavenging control valve slide in the axial direction on the inner surface of the cylinder liner, it is possible to freely vary the scavenging air passage's aperture anywhere from the fully closed to the fully open state for the scavenging air holes, all while maintaining a good seal between the sliding area of the valve and the cylinder liner.

This enables the area of the aperture of the scavenging air passage to change to the target value to accurately control the pattern of the aperture area.

## Claims

1. An internal combustion engine equipped with a plurality of scavenging holes in a lower part of a cylinder liner running along the circumferential direction to bring scavenging air into a combustion chamber, and an exhaust valve in a cylinder cover, comprising:
a scavenging control valve for changing the area of an aperture of a scavenging air passage to a cylinder, which is slidably mounted to either the inner surface or outer surface of the cylinder liner to open and close the scavenging holes; and
a valve operating device to drive said scavenging control valve in response to an engine's crank angle, wherein said valve operating device controls said scavenging control valve to synchronize the closing timing of the scavenging passage after the bottom dead position with the timing of exhaust valve closure.

2. The internal combustion engine according to claim 1, wherein said valve operating device sets the beginning of the opening timing for said scavenging control valve to be timed just after the bottom dead position of the stroke.

3. The internal combustion engine according to claim 1 or 2, further comprising:
a crank angle detection means to detect an engine's crank angle; and
an engine operating status detection means which detects such operational status as engine RPM and engine load;
wherein said valve operating device controls said scavenging control valve based upon the input of the crank angle detected by said crank angle detection means and the input of operational status detected by said engine operating status detection means.

4. An internal combustion engine equipped with a plurality of scavenging holes in the lower part of a cylinder liner running along Ube circumferential direction to bring scavenging air into a combustion chamber, and an exhaust valve in a cylinder cover, provided with a scavenging control apparatus, said scavenging control apparatus, comprising:
a scavenging control valve for changing the area of an aperture of a scavenging air passage to a cylinder, which is slidably mounted to the inner surface of the cylinder liner to open and close the scavenging holes; and
a valve control device to drive said scavenging control valve in response to an engine's crank angle, wherein the area of the aperture of the scavenging air passage can be varied by moving said scavenging control valve with respect to the crank angle of the engine.

5. The internal combustion engine according to claim 4, further comprising an oil injection device which forcibly injects lubricating oil onto sliding surfaces of said scavenging control valve and cylinder liner.

6. The internal combustion engine according to claim 4 or 5, wherein the sliding surface of said scavenging control valve is surface-treated by such as nitriding to make the sliding surface stronger than the base material of the cylinder liner.

7. The internal combustion engine according to any of the claims 4-6, wherein said scavenging control valve can be a rotating type of scavenging control valve which can be reversibly rotated in the circumferential direction on the inner surface of the cylinder liner by said scavenging control apparatus.

8. The internal combustion engine according to any of the claims 4-7, wherein the height (H₂) in the axial direction of the cylinder liner is formed to be less than the height (H₁) from the top surface of the first piston ring to the bottom surface of the bottommost piston ring.

9. The internal combustion engine according to any of the claims 4-8, wherein said scavenging control valve can be a reciprocating type of scavenging control valve which can be reversibly reciprocated in the axial direction on the inner surface of the cylinder liner by said scavenging control apparatus.

10. The internal combustion engine according to any of the claims 4-9, which is equipped with said scavenging control valve reciprocally mounted onto the inner surface of said cylinder liner, said scavenging control valve being slidable in the circumferential or axial direction along the inner surface of said cylinder liner by a driver unit provided outside of said cylinder liner, wherein said cylinder liner is provided with a drive link opening at a position where said slidable scavenging control valve can seal said opening, and said driver unit and said scavenging control valve are connected by a drive link through said driver link opening.

11. The internal combustion engine according to any of the claims 4-10, which is equipped with said scavenging control valve reciprocally mound onto the inner surface of said cylinder liner, said scavenging control valve being slidable in the circumferential or axial direction along the inner surface of said cylinder liner by a driver unit provided outside of said cylinder liner, wherein said cylinder liner is provided with a pair of sliding guides which guide said scavenging control valve reciprocally, and said pair of sliding guide can form an air tight-sealing between said cylinder liner and said scavenging control valve.
